# EUROPÄISCHE PATENTSCHRIFT

(11) **EP 3 121 335 B1**
(45) Veröffentlichungstag und Bekanntmachung des Hinweises auf die Patenterteilung: **02.10.2019**
(21) Anmeldenummer: 15178356.0
(22) Anmeldetag: 24.07.2015
(51) Int. Cl.: E01F 9/582

(54) **ELEKTRISCH LEITENDE FAHRBAHNMARKIERUNG UND STRASSE MIT EINER ELEKTRISCH LEITENDEN FAHRBAHNMARKIERUNG**
ELECTRICALLY CONDUCTIVE ROAD MARKING AND ROAD HAVING AN ELECTRICALLY CONDUCTIVE ROAD MARKING
MARQUAGE ROUTIER ÉLECTRIQUEMENT CONDUCTEUR ET RUE AVEC UN MARQUAGE ROUTIER ÉLECTRIQUEMENT CONDUCTEUR

(43) Veröffentlichungstag der Anmeldung: 25.01.2017
(73) Patentinhaber: Lucobit AG, Brühler Straße 60 Basell Polyolefine GmbH - B 100 50389 Wesseling (DE)
(72) Erfinder: Riegler, Robert, 67459 Böhl-Iggelheim (DE)
(74) Vertreter: Bungartz Christophersen mbB

(56) Entgegenhaltungen:
- US-A- 3 836 275
- US-A- 3 846 672
- US-A- 3 996 556
- US-A- 4 428 990

## Beschreibung

Die Erfindung betrifft eine elektrisch leitende Fahrbahnmarkierung nach dem Oberbegriff des Anspruchs 1 und insbesondere eine elektrisch leitende Fahrbahnmarkierung mit einer Trägerbahn, zumindest zwei, sich längs der Trägerbahn erstreckenden, elektrisch leitfähigen Adern, einer die Adern abdeckenden, elektrisch isolierenden Deckschicht und mit wenigstens einer Stromeinspeisung, die von einer Schnittstelle zum Einspeisen von Strom und/oder Daten gebildet ist und die Adern mit einer Zuleitung verbindet. Ferner betrifft die Erfindung eine Straße mit einer solchen Fahrbahnmarkierung.

Elektrisch leitende Fahrbahnmarkierungen dieser Art sind aus der WO 2013017410 A1 bekannt. Diese Fahrbahnmarkierung weist einen Schichtaufbau auf, der auf die Fahrbahn aufgebracht wird. Hierzu wird in die Fahrbahn ein Kanal eingefräst, der die Fahrbahnmarkierung aufnimmt. Der Schichtaufbau besteht dabei aus einer Trägerschicht, unter der eine Schutzschicht sowie eine Klebeschicht angeordnet sind. Auf der Trägerschicht befinden sich zwei elektrisch leitende Schichten übereinander, einmal eine Rückelektrode und zum anderen eine Frontelektrode. Unter der Frontelektrode ist eine lichtlimitierende Schicht vorgesehen, wobei das von ihr imitierte Licht durch die durchsichtige Frontelektrode und eine mehrschichtige, durchsichtige Deckschicht hindurch scheinen kann. Die Frontelektrode und die Rückelektrode versorgen dabei die lichtlimitierende Schicht mit der notwendigen Spannung und sind an eine Wechselspannungsquelle angeschlossen.

Die bekannte Fahrbahnmarkierung hat den Nachteil, dass sie nur zur Illumination der Deckschicht verwendet werden kann und andere elektrische Verbraucher nicht anschließbar sind. Ein weiterer Nachteil besteht darin, dass aufgrund des aufwändigen Schichtaufbaus der Kanal in die Fahrbahn eingebracht werden muss, was nicht nur mit zusätzlichem Aufwand verbunden ist, sondern auch die Fahrbahn beschädigt. So muss zum Beispiel dann, wenn die Fahrbahnmarkierung geändert werden soll und eine Markierung beseitigt werden muss, der Kanal wieder verfüllt werden.

Eine Fahrbahnmarkierung nach dem Oberbegriff des Anspruchs 1 ist aus der US 3 836 275 A bekannt. Diese Fahrbahnmarkierung besteht aus einem elastischen Streifen mit darin angeordneten elektrischen Leitern und Aufnahmetaschen für Leuchteinsätze, die beim Einstecken ind die Aufnahmetaschen mit den elektrischen Leitern in Kontakt treten. Der elastisehe Streifen wird in Nuten in dem Fahrbahnbelag eingelegt und mit dem Nutgrund verklebt. Auch diese Fahrbahnmarkierung erfordert eine gewisse Dicke und damit das Einbringen einer Nut in die Fahrbahn. Ferner sind die Herstellung und das Verlegen aufwändig.

Aufgabe der Erfindung ist es daher, eine elektrisch leitende Fahrbahnmarkierung zu schaffen, die einfach zu verlegen und möglichst universell einsetzbar ist. Eine weitere Aufgabe besteht darin, eine Straße zu schaffen, die einfach mit Sensoren oder Leuchtelementen ausgerüstet werden kann.

Diese Aufgabe wird nach der Erfindung durch eine elektrisch leitfähige Fahrbahnmarkierung nach Anspruch 1 gelöst. Bezüglich der Straße wird diese Aufgabe durch eine Straße nach Anspruch 13 gelöst.

Bei einer bevorzugten Ausbildung der Erfindung sind die Adern nebeneinander längs der Trägerbahn verlaufend auf der Trägerbahn angeordnet und die Deckschicht weist zur Bildung der Kontaktierungsbereiche Abschnitte auf, die lösbar mit dem unteren Teil der Fahrbahnmarkierung verbunden sind, wobei im Bereich des Kontaktierungsbereiches durch partielles Ablösen der Deckschicht zumindest eine der Adern wenigstens partiell zum Kontaktieren freilegbar ist.

Die Fahrbahnmarkierung dient nicht nur als Fahrbahnmarkierung, sondern auch als Leitung. Diese Leitung kann eine stromführende Versorgungsleitung oder auch eine Datenleitung oder eine Kombination hieraus sein. Die Anzahl der parallel zueinander angeordneten Adern, die durch die Adern gebildet werden, ist hierbei kaum begrenzt. Da zum Stromführen und zur Datenübermittlung je nach Spannung und Stromstärke eine Breite von einem oder einigen wenigen Millimetern ausreichend ist, können bei der üblicherweise ca. 100 mm breiten Fahrbahnmarkierung eine Vielzahl von Adern nebeneinander gelegt werden, die bevorzugt parallel zueinander verlaufen. Darüber hinaus ist es natürlich auch möglich, die Adern paketweise übereinander anzuordnen.

Zunächst wird die Erfindung anhand eines einfachen Ausführungsbeispiels genauer beschrieben. Der Grundaufbau einer erfindungsgemäßen Fahrbahnmarkierung umfasst die Trägerbahn, die auf eine Fahrbahn aufgeklebt werden kann. Hierzu wird bevorzugt ein dauerhafter, aber auch elastischer Klebstoff verwendet. Auf diese Trägerbahn werden dann mittelbar oder unmittelbar die Adern aufgebracht. Diese Adern sollen erfindungsgemäß elektrisch leitend sein, sind also aus einem leitfähigen Material, das aufgeklebt oder aufgedruckt werden kann. Hier können zum Beispiel Folienstreifen oder im Siebdruck aufgebrachte Metallpartikel verwendet werden. Ein besonderer Vorteil des Aufbaus besteht darin, dass hier eine Endlosproduktion möglich ist.

Zwischen den beiden Adern kann eine Isolationsschicht vorgesehen sein, die besonders dann sinnvoll ist, wenn die Adern eine gewisse Dicke haben. In diesem Fall kann die Isolationsschicht die gleiche Dicke aufweisen, so dass sie zusammen mit außen liegenden Isolationsschichten und den Adern eine ebene Fläche bildet. Auf diese partiell elektrisch leitfähige Zwischenschicht wird dann die Deckschicht aufgebracht.

Die Deckschicht ist in ihrem Aufbau im Wesentlichen nicht begrenzt, muss aber nicht mehrschichtig sein. Wie auch schon bei den bekannten Fahrbahnmarkierungen und den allgemein bekannten Baustellenmarkierungen bzw. Randbegrenzungen kann die Deckschicht aus einem lichtreflektierenden Material gefertigt sein. Ein mehrschichtiger Aufbau kann zum Beispiel aus einer haftenden Grundschicht mit einer darauf laminierten Funktionsschicht, die beispielsweise reflektierend ausgebildet ist, bestehen.

Ein Grundgedanke der Erfindung ist die Tatsache, dass die so aufgebaute Fahrbahnmarkierung nun Kontaktierungsbereiche aufweist, über die das elektrische Signal bzw. die anliegende Spannung abgegriffen oder auch Signale und Strom eingekoppelt werden kann. Hierzu ist die Deckschicht so ausgebildet, dass sie im Bereich der Kontaktierungsbereiche zumindest partiell entfernt werden kann um die Adern freizulegen.

Während zum Beispiel zwischen den Kontaktierungsbereichen die Deckschicht fest mit dem darunterliegenden, die Adern umfassenden Bereich der Fahrbahnmarkierung verbunden sein kann, kann die Deckschicht im Bereich der Kontaktierungsbereiche lösbar ausgebildet sein. Hierzu kann beispielsweise die Unterseite des jeweiligen Bereichs der Deckschicht mit einem lösbaren Klebstoff nach der Art eines lösbaren Aufklebers versehen sein.

Die Fahrbahnmarkierung weist in festgelegten Abständen relativ zueinander Kontaktierungsbereiche auf, die von einem abziehbaren, adhäsiven Schutzstreifen abgedeckt sind. Dieser kann über Perforationen oder Sollbruchstellen bzw. Sollrissstellen mit den angrenzenden Teilen der Deckschicht verbunden sein. Solange die elektrische Isolation der darunterliegenden Adern über der Umgebung gewährleistet ist, ist dies allerdings keine notwendige Voraussetzung.

Soll nun das Signal der Adern abgegriffen werden, wird von der nicht verlegten oder bevorzugt von der verlegten Fahrbahnmarkierung der adhäsive Schutzstreifen abgezogen, wodurch die Adern freigelegt werden. Bei einer möglichen Ausgestaltung der Erfindung kann nun anstelle des Schutzstreifens ein Kontaktelement auf der Fahrbahnmarkierung angeordnet werden. Dieses ist bevorzugt ebenfalls adhäsiv, so dass es anstelle des Schutzstreifens einfach auf die freie Lücke in der Deckschicht aufgeklebt werden kann.

Das Kontaktelement kann zum Beispiel zwei an seiner Unterseite befindliche Kontaktbereiche aufweisen, die elektrisch leitfähig sind und sich beim Aufkleben oder sonstigen Aufbringen des Kontaktelementes auf den freigelegten Bereich der Fahrbahnmarkierung an die freigelegten Adern anlegen. Das Kontaktelement kann bei einer möglichen Ausgestaltung eine Anschlussleitung aufweisen, vom Kontaktelement wegführt und über die zum Beispiel elektrische Verbraucher oder aber auch Datenverarbeitungsgeräte angeschlossen werden können. Die Anschlussleitung wiederum ist über Leiterbahnen mit den Kontaktbereichen verbunden, so dass das Kontaktelement die elektrische Verbindung zwischen der Anschlussleitung und den Adern herstellt.

Eine mögliche Anwendung der Erfindung ist zum Beispiel die Steuerung und Versorgung von Warnbaken im Baustellenbereich einer Straße. Hier können zum Beispiel zwei Adern nebeneinander vorgesehen sein, so dass das Kontaktelement die Leuchtelemente der Warnbaken über die Anschlussleitung mit Strom zu versorgen vermag. Hier dient also eine der Adern als Phase und die andere Ader als Nullleiter. Ist eine zusätzliche Datenleitung vorgesehen, kann zusätzlich ein Ein- und/oder Ausschaltsignal übermittelt und abgegriffen werden. Hierzu weist dann entweder das Kontaktelement oder der angeschlossene elektrische Verbraucher, im beschriebenen Beispiel die Warnbake, eine entsprechende Schaltung auf, die das Steuersignal auszuwerten vermag. Alternativ kann dieses Steuersignal natürlich auch auf die Phase aufmoduliert werden.

Die Kontaktierungsbereiche sind bei einer Ausgestaltung der Erfindung in gleichen Abständen zueinander innerhalb der Deckschicht vorgesehen. Dies kann beispielsweise alle 100 cm der Fall sein. Letztlich kommt es allerdings auf den Einsatzzweck der Fahrbahnmarkierung an, insbesondere auf die Anzahl und Funktion der anzuschließenden Geräte.

So kann die Fahrbahnmarkierung ausschließlich zur Versorgung von Leuchtelementen mit elektrischer Spannung genutzt werden. In diesem Fall wird es ausreichend sein, wenn die Kontaktierungsbereiche den Abstand aufweisen, den üblicherweise Leuchtelemente untereinander haben. Im Baustellenbereich wäre dies zum Beispiel ein Abstand von ca. 10 m. Da jedoch in Kurvenbereichen und zu Beginn der Baustelle zum Beispiel Warnbaken wesentlich enger gestellt werden, wird es üblicherweise bevorzugt sein, dass die Abstände kleiner sind, wobei ja nicht jeder Kontaktierungsbereich genutzt werden muss.

Der elektrische Anschluss von externen Funktionsgeräten, wie die bereits beschriebenen Warnbaken, ist nur eine mögliche Verwendung der leitfähigen Fahrbahnmarkierung. So ist es weiterhin möglich, unmittelbar anstelle der Kontaktelemente Funktionselemente auf die Fahrbahnmarkierung unter Nutzung der Kontaktbereiche aufzubringen. Solche Funktionselemente können zum Beispiel auch Lichtquellen sein. Im Straßenbau sind ähnliche Elemente als sogenannte Nägel mit Reflektoren bereits bekannt. Durch die elektrisch leitfähige Fahrbahnmarkierung können diese nun als aktive Lichtquellen ausgebildet werden. In Verbindung mit einer Steuerleitung können auch Leuchteffekte erzielt werden, etwa in Form eines in Fahrtrichtung laufenden Lauflichtes.

Sofern als Lichtquelle Leuchtdioden Verwendung finden, kann auch die Farbe geändert werden, ein entsprechendes Signal kann über die Steuerleitung bereitgestellt oder auf die Phase aufmoduliert werden. Dies gilt sowohl bei unmittelbar auf der Fahrbahnmarkierung aufgebrachten Funktionselementen als auch bei den externen Geräten.

Eine weitere sehr interessante Anwendungsmöglichkeit der Erfindung besteht zum Beispiel darin, dass an den Kontaktierungsbereich eine quer zur Fahrbahn verlaufende Signalleitung angeschlossen wird, wobei diese das Überfahren und insbesondere die Fahrtrichtung erkennen kann. Hierzu können zum Beispiel dicht nebeneinander zwei quer zur Fahrbahn verlaufende linienförmige Drucksensoren vorgesehen werden, wobei die Reihenfolge des Signalanstiegs dann dahingehend ausgewertet werden kann, in welche Fahrtrichtung ein Auto fährt. Der Anschluss dieser linienförmige Sensoren, die beispielsweise von Piezofolien gebildet sein können, erfolgt dann zum Beispiel über ein Funktionselement, das eine Steuerung aufweist, die die Signale auszuwerten vermag über eine Signalleitung das Ergebnis an eine zentrale Steuerung weiterleitet. Alternativ kann dieses Funktionselement auch die Steuerung selbst sein, so dass sich die Weiterleitung erübrigt. Ergibt die Auswertung, dass ein Fahrzeug zum Beispiel auf einer Autobahn in die falsche Richtung fährt, können dann nachgeschaltete Leuchtelemente, wie sie oben beschrieben wurden, über Leuchtdioden rot blinken um dem Fahrer seinen Fehler zu signalisieren. Ferner kann über die Datenverbindung ein Alarm abgesetzt werden. Auch die Warnung anderer Autofahrer ist über Leuchtelemente möglich.

Ebenfalls kann über geeignete Sensoren, zum Beispiel die oben beschriebenen, quer verlaufenden Drucksensoren, die aktuelle Geschwindigkeit der auf einer Straße fahrenden Fahrzeuge gemessen werden. Ergibt diese Messung, dass die Fahrzeuge ungewöhnlich langsam fahren, kann auf einen Stau geschlossen werden, der über entfernt liegende Leuchtelemente dem nachfolgenden Verkehr angezeigt werden kann.

Ist zum Beispiel die erfindungsgemäße Fahrbahnmarkierung längs einer Autobahn verlegt, kann über quer zur Autobahn verlaufende Drucksensoren, die paarweise vergleichsweise dicht nebeneinander verlegt sind, die aktuelle Geschwindigkeit des fließenden Verkehrs gemessen werden. Unterschreitet diese Geschwindigkeit ein festgelegtes Minimum, kann das auf der Fahrbahnmarkierung im Bereich der Kontaktbereiche liegende Funktionselement über eine integrierte Logik diesen kritischen Zustand erfassen und über eine in die Fahrbahnmarkierung integrierte Datenleitung an eine zentrale Steuerung weiterleiten. Diese kann bei einer bevorzugten Ausgestaltung der Erfindung über weitere Sensoren ermitteln, wo sich das Stauende befindet.

Die so ermittelten Erkenntnisse über die Straßenbelegung können zum einen genutzt werden, um innerhalb des Bereiches vor dem Stau über auf der Fahrbahnmarkierung befindliche oder externe Leuchtelemente den nachfolgenden Verkehr vor dem drohenden Stau zu warnen. Hierzu können zum Beispiel am Kontaktierungsbereich im Alarmfall blinkende Leuchtmittel vorgesehen sein. Sind diese Leuchtmittel Leuchtdioden, kann auch die Farbe eingestellt werden, so dass bei weiterer Entfernung vom Stau die Leuchtmittel Geld blinken, bei weiterer Annäherung dann eine rote Farbe gewählt wird. Auch über die Blinkfrequenz kann ein kritischer Zustand eindringlich weitergegeben werden. Ein weiterer Vorteil der Ermittlung der Straßenbelegung ist die Tatsache, dass die so erfassten Daten automatisch den Verkehrsüberwachungsdiensten und Rundfunkanstalten übermittelt werden können.

Insbesondere dann, wenn die Fahrbahnmarkierung zur Übermittlung von Daten genutzt wird, können über die Kontaktierungsbereiche auch Datenverarbeitungsgeräte angeschlossen werden. Diese können in gewissen Abständen längs der Fahrbahn verteilt sein und die ermittelten Daten auswerten sowie über Datenleitungen innerhalb der Fahrbahnmarkierung weitergeben. So können auch Temperaturmessgeräte angeschlossen werden, um zum Beispiel die Autofahrer vor drohender Eisglätte zu warnen. Gleiches gilt für Windmessgeräte, die z.B. im Brückenbereich neben der Autobahn platziert werden können und deren Signal über die Datenleitung der Fahrbahnmarkierung weitergegeben werden kann. Selbst eine Warnung vor Wildwechsel ist über Wärmebildkameras möglich.

Insbesondere dann, wenn als Leuchtmittel Leuchtdioden mit einem geringen Stromverbrauch verwendet werden, können die elektrisch leitenden Fahrbahnmarkierungen besonders günstig eingesetzt werden. Besonders vorteilhaft ist es, wenn die Fahrbahnmarkierung Phase und Nullleiter zur Verfügung stellt sowie zusätzlich wenigstens eine Datenleitung aufweist, über die verschiedene Leuchtmittel angesteuert werden können, die an die so bereitgestellte Stromversorgung angeschlossen sind. Auf diese Weise können nicht nur die bereits beschriebenen Warnbaken, sondern auch Orientierungslichter und sogar Verkehrsampeln gesteuert werden.

Weitere Merkmale und Vorteile der Erfindung ergeben sich der nachfolgenden Beschreibung bevorzugter Ausführungsbeispiele anhand der Zeichnungen.

In den Zeichnungen zeigt:
- Fig. 1: eine Fahrbahn mit einer möglichen Anwendung der Erfindung,
- Fig. 2: eine erfindungsgemäße Fahrbahnmarkierung in einem Querschnitt,
- Fig. 3: den Bereich der Kontaktierung der Fahrbahnmarkierung in einer dreidimensionalen Ansicht,
- Fig. 4: ein Kontaktelement zur Kontaktierung mit der Fahrbahnmarkierung,
- Fig. 5: eine Fahrbahnmarkierung mit angesetztem Kontaktelement,
- Fig. 6: eine weitere Ausgestaltung einer Fahrbahnmarkierung und
- Fig. 7: die in Figur 6 dargestellte Fahrbahnmarkierung in einer Seitenansicht im Schnitt.

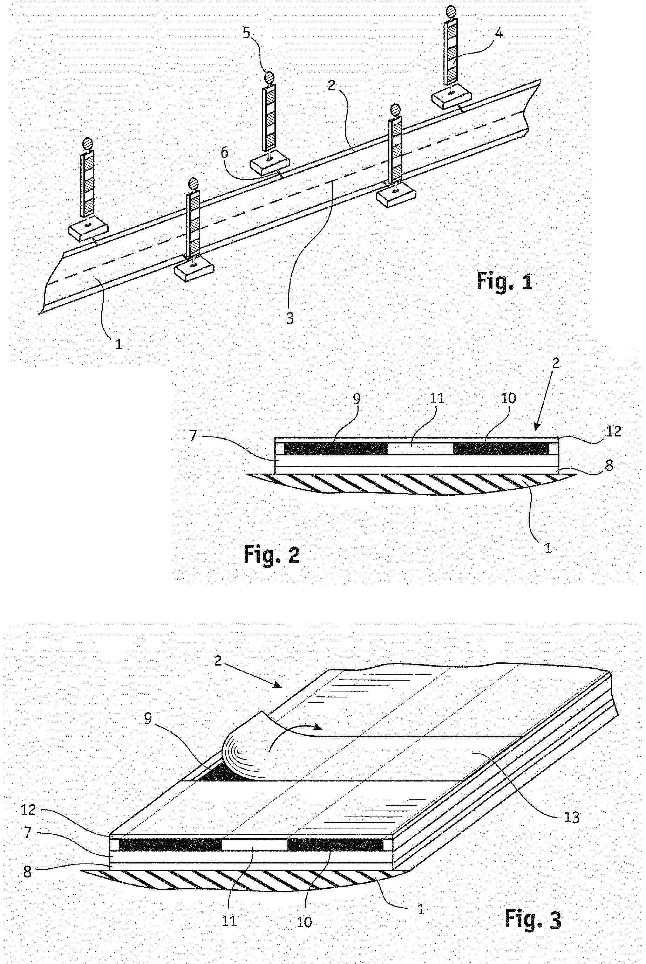

In Figur 1 ist die Fahrbahn 1 einer Straße mit einer erfindungsgemäßen Fahrbahnmarkierungen 2 beispielhaft und schematisch dargestellt. Es handelt sich hier um eine Straße im Baustellenbereich. Zu beiden Seiten der Fahrbahn 1 sind Warnbaken 4 aufgestellt, an deren oberen Ende Leuchtelemente 5 angeordnet sind. Diese Warnbaken 4 werden heutzutage üblicherweise über batteriebetriebene Lampen beleuchtet, die den Nachteil haben, dass das obere Ende vergleichsweise schwer ist, wodurch Kollisionen mit vorbeifahrenden Fahrzeugen folgenreich sein können.

Die erfindungsgemäße Fahrbahnmarkierung 2 ermöglicht nun den Verzicht auf die Batterien durch die Stromversorgung über eine Zuleitung 6. Eine hierfür geeignete Fahrbahnmarkierung 2 ist in Figur 2 in einer Schnittansicht im Querschnitt dargestellt. In Figur 2 wurde auf das übliche gestrichelte Darstellen der Schnittflächen bewusst verzichtet, um die einzelnen Schichten besser darstellen zu können. Die Fahrbahnmarkierung 2 ist auf eine Fahrbahn 1 über eine Klebstoffschicht 8 geklebt. Sie besteht aus einer Trägerbahn 7, die längs der Ränder der Fahrbahn 1 verläuft.

Auf die Trägerbahn 7 sind eine erste Ader 9 und eine zweite Ader 10 als flache Leiterbahnen aufgebracht. Diese können beispielsweise als Folienbahnen oder gedruckte, leitende Schicht ausgebildet sein. Zwischen den als Leiterbahnen dienenden Adern 9, 10 ist hier eine insbesondere bei dünnen Adern 9, 10 nicht unbedingt notwendige Isolationsschicht 11 vorgesehen. Auch an den beiden Seitenrändern ist jeweils eine Isolationsschicht angeordnet, die die Adern 9, 10 seitlich nach außen abdecken. Auf der so gebildeten Zwischenschicht ist wiederum eine Deckschicht 12 vorgesehen, die wie bei üblichen Fahrbahnmarkierungen, insbesondere aus der Anwendung im Baustellenbereich bekannt, reflektierend ausgebildet sein kann. Auf diese Weise ergibt sich eine Fahrbahnmarkierung, die zusätzlich als Leiterbahn Verwendung finden kann.

Damit nun die Zuleitungen 6 mit den Adern 9, 10 verbunden werden können, sind Kontaktierungsbereiche vorgesehen. Diese Kontaktierungsbereiche sind in Figur 3 dargestellt. Zur Bildung des Kontaktierungsbereiches weist die Deckschicht einen über Perforationen mit den angrenzenden Rändern verbundenen Schutzstreifen 13 auf. Dieser kann dann, wenn der Kontaktierungsbereich benötigt wird, abgezogen werden, wodurch die darunterliegenden Adern 9,10 freigelegt werden. Hieran kann nun die Zuleitung 6 oder ein sonstiges Funktionselement angeschlossen werden.

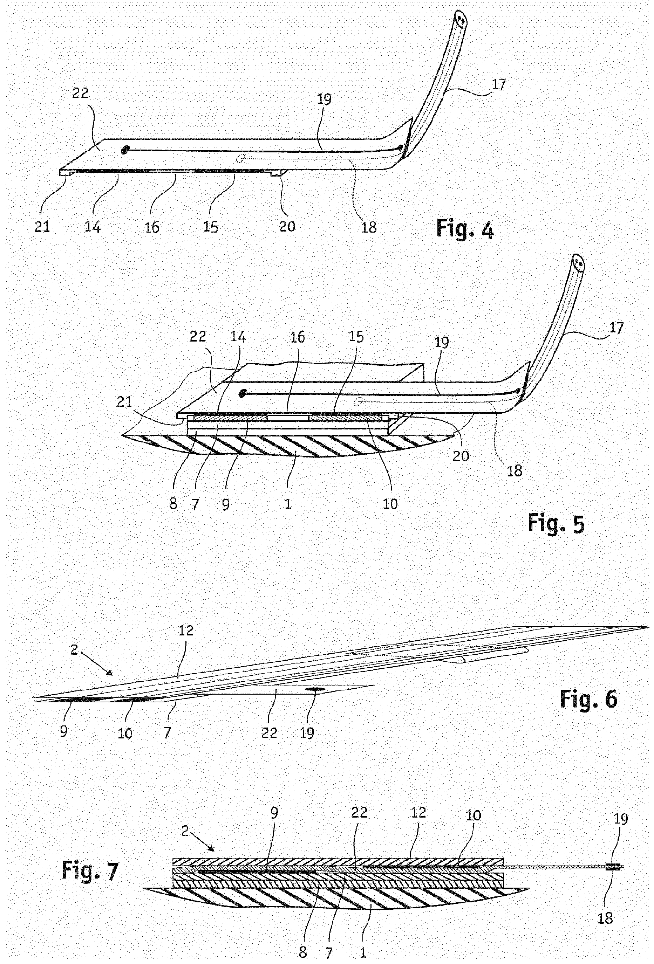

Der Anschluss an die Adern 9,10 erfolgt zum Beispiel über ein Kontaktelement 22. Ein solches Kontaktelement 22 ist in Figur 4 dargestellt. Es besteht aus einem Abdeckstreifen, der die Lücke, die durch Abziehen des Schutzstreifens 13 entstanden ist, abdeckt. Der Abdeckstreifen kann auch die Deckschicht an beiden Rändern zur besseren Abdichtung überlappen.

In den Abdeckstreifen sind Leiterbahnen als Kontaktierungen 18,19 eingebracht, die einen ersten Kontaktbereich 14 und einen zweiten Kontaktbereich 15 an der Unterseite des Kontaktelementes mit einer Zuleitung 10 verbinden. Die Kontaktbereiche 14,19 wiederum liegen an den Adern 9,10 an, wenn das Kontaktelement 22 im Kontaktierungsbereich auf den unteren Teil der Fahrbahnmarkierung geklebt ist. Im gezeigten Ausführungsbeispiel sind die Kontaktierung 18 an der Unterseite des Abdeckstreifens und die Kontaktierung 19 an dessen Oberseite vorgesehen, wobei letztere dann durch den Abdeckstreifen hindurch mit dem ersten Kontaktbereich verbunden ist. Eine hier nicht dargestellte Abdeckung isoliert den Abdeckstreifen gegenüber der Umgebung.

Das Kontaktelement 22 weist im gezeigten Ausführungsbeispiel als Positionierhilfe ein erstes Zentrierelement 20 am rechten Rand sowie ein zweites in Zentrierelement 21 am linken Rand der Fahrbahnmarkierung 2 auf. Dies sind kleine Elemente, die nach unten hervorspringen, so dass beim Montieren eindeutig die richtige Position in Querrichtung getroffen werden muss, wenn die beiden Zentrierelemente rechts und links die Isolierschichten an den Rändern der Fahrbahnmarkierung 2 umgreifen sollen. Gleichzeitig kann eines der beiden Zentrierelemente als Anlage zum sicheren Verkleben des Kontaktelementes 22 mit der darunter befindlichen Lage der Fahrbahnmarkierung 2 verwendet werden.

Figur 5 zeigt den montierten Zustand des Kontaktelementes 22 aus Figur 4. Zu erkennen ist, dass die beiden Zentrierelemente 20, 21 rechts und links neben den Isolierschichten an den Rändern der Fahrbahnmarkierung 2 zum Liegen gekommen sind. Die Kontaktbereiche 14,15 liegen oberhalb der Adern 9,10 und stellen so die elektrische Verbindung dar.

In Figur 6 ist eine weitere Ausgestaltung einer erfindungsgemäßen Fahrbahnmarkierung 2 dargestellt. Diese weist eine Trägerschicht 7 auf, auf der eine erste Ader 9 sowie eine zweite Ader 10 als folienartige Leiter angeordnet sind. Die Leiter müssen nicht folienartig sein, hier können auch übliche Litzen, massive Kupferleitungen oder auch gedrillte Paare von Kabeln Verwendung finden. Oberhalb der Adern 9,10 ist auch hier eine Deckschicht 12 angeordnet. Figur 7 zeigt diesen Aufbau in einer Querschnittsansicht.

Anstelle der in den Figuren 4 und 5 dargestellten Kontaktelemente 22 wird bei der Ausgestaltung nach den Figuren 6 und 7 ein Kontaktelement 22 verwendet, das seitlich aus der Fahrbahnmarkierung 2 herausragt. Dieses Kontaktelement 22 weist an seinem Ende den hier nicht sichtbaren Bereich für die Kontaktierung des zweiten Kontaktbereichs 18 sowie den Bereich für die Kontaktierung des ersten Kontaktbereichs 19 auf. Das Kontaktelement 22 erstreckt sich in die Fahrbahnmarkierung 2 zwischen die Trägerschicht 7 und die Deckschicht 12.

Im gezeigten Ausführungsbeispiel verläuft das Kontaktelement 22 unterhalb der Ader 10 und oberhalb der Ader 9. Dies ist allerdings nur eine beispielhafte Darstellung. Das Kontaktelement 22 ist über den hier nicht sichtbaren ersten Kontaktbereich 14 mit der Ader 9 und den hier ebenfalls nicht sichtbaren zweiten Kontaktbereich 15 mit der Ader 10 elektrisch verbunden. Hierzu kann es beispielsweise bezüglich der Ader 9 an seiner Unterseite bzw. bezüglich der Ader 10 an seiner Oberseite mit freiliegenden, elektrisch leitenden Kontaktbereichen versehen sein, die an dem dann ebenfalls bezüglich dieser Kontaktbereiche freiliegenden ersten Kontaktbereich 14 und dem zweiten Kontaktbereich 15 anliegen.

Der seitlich nach außen hervorragende Bereich des Kontaktelementes 22 ist bevorzugt, aber nicht notwendigerweise flexibel ausgebildet. Er kann in ein Anschlusskabel übergehen, das einen Stecker oder eine Buchse zum Anschließen von elektrischen Verbrauchern oder Sensoren aufweisen kann. Auch sonstige Ausgestaltungen von Schnittstellen sind natürlich möglich, insbesondere aus der Datenübertragungstechnik bekannte Stecker oder Buchsen. Insbesondere Impulssignale zum Ein-, Aus- oder Umschalten von Betriebszuständen, aber auch andere Signale können auch berührungslos, etwa über Induktion, übertragen werden.

Die Kontaktelemente 22, so wie sie in den Figuren 6 und 7 dargestellt sind, sind bevorzugt im Abstand zueinander längs der Fahrbahnmarkierung 2 vorgesehen. Der Bereich der Kontaktierung 18,19 ist dabei bevorzugt elektrisch so isoliert, dass diese Isolation zum Anschließen von elektrischen Verbrauchern entfernt werden kann. Geht der nach außen hervorragende Bereich des Kontaktelementes 22 in ein Kabel, eine Buchse oder einen Stecker über, ist dies natürlich nicht notwendigerweise notwendig.

Figur 6 zeigt eine besonders vorteilhafte Ausgestaltung der Fahrbahnmarkierung 2. Hier ist im vorderen Bereich das Kontaktelement 22 flach auf die Fahrbahn 1 (hier nicht dargestellt) aufgelegt, so dass über die Kontaktierungsbereiche 19 und (nicht sichtbar) 18 der elektrische Verbraucher angeschlossen werden kann. Im hinteren Bereich ist ein Kontaktierungselement 22 zu erkennen, das passiviert wurde. Hierzu wurde es vor dem Aufkleben der Fahrbahnmarkierung 2 auf die Fahrbahn 1 (nicht dargestellt) nach unten umgeschlagen und liegt nun innerhalb der Klebstoffschicht 8 (nicht dargestellt), die die Fahrbahnmarkierung 2 auf der Fahrbahn 1 festhält. Die Kontaktierungsbereiche 18,19 können durch die Klebstoffschicht oder auch durch entweder von vornherein vorhandene Abdeckmittel oder separat aufgebrachte Abdeckungen elektrisch isoliert sein.

Die Ausgestaltung der Fahrbahnmarkierung 2 nach Figur 6 erlaubt es, nur diejenigen Kontaktelemente 22 zu benutzen, die jeweils zum Anschluss von Verbrauchern benötigt werden. Andererseits muss das Kontaktelement 22 im Bedarfsfalle nicht zusätzlich angebracht werden, so dass die Montage der Fahrbahnmarkierung 2 besonders einfach ist. Das Umschlagen nach unten sowie das Aufkleben der ungeschlagenen Bereiche des Kontaktelementes 22, so wie es im hinteren Bereich der Figur 6 dargestellt ist, ist ebenfalls nicht unbedingt notwendig, verhindert aber, dass nicht benötigte Teile des Kontaktelementes 22 seitlich als lose Laschen von der Fahrbahnmarkierung 2 abstehen und dann möglicherweise, etwa durch einen Schneeräumer, abgerissen werden.

Selbstverständlich können auch die Ausgestaltungen nach Figur 4 bzw. 5 und Figur 6 bzw. 7 miteinander kombiniert werden, so dass zum Beispiel auch nachträglich noch zusätzliche Kontaktierungen vorgenommen werden können. Die beiden dargestellten Anschlussmöglichkeiten sind auch nur als Beispiel zu verstehen, letztlich können alle anderen Anschlussformen mit seitlich herausgeführten Kabeln, einer unmittelbaren Kontaktierung auf der Fahrbahnmarkierung 2 oder auch einen seitlichen abgreifen von dem 1. Kontaktbereich 14 und im 2. Kontaktbereich 15, der dann seitlich frei liegt, umgesetzt werden.

Die Anzahl der Adern 9,10 ist für die Umsetzung der Erfindung nicht wesentlich. Ferner können die Adern 9,10 stromführende Leiter sein, es können aber auch Daten über die Adern 9,10 übertragen werden. Eine Datenübertragung kann zusätzlich zur Stromführung durch eine Ader 9,10 erfolgen, wobei dann zum Beispiel das Datensignal auf die als Trägerfrequenz genutzte Wechselstromspannung aufmoduliert ist. Alternativ kann auch eine separate Datenleitung Verwendung finden, wobei die Adern 9,10 auch nicht identisch sein müssen. So kann beispielsweise als stromführende Ader 9,10 eine flache, leitende Folie Verwendung finden, während verdrillte Litzenkabel (sog. Twisted Pair), so wie sie aus der Datentechnik bekannt sind, zur Datenübertragung genutzt werden können. Die Adern 9,10 können durch zusätzliche Isolatoren oder Isolationsschichten abgeschirmt sein, um störende Einflüsse des Verkehrs oder von Signalvorrichtungen zu verhindern.

### Bezugszeichenliste:

- 1: Fahrbahn
- 2: Fahrbahnmarkierung
- 3: Mittelstreifen
- 4: Warnbake
- 5: Leuchtelement
- 6: Zuleitung
- 7: Trägerbahn
- 8: Klebstoffschicht
- 9: Ader
- 10: Ader
- 11: Isolationsschicht
- 12: Deckschicht
- 13: Schutzstreifen
- 14: Erster Kontaktbereich
- 15: Zweiter Kontaktbereich
- 16: Isolationsbereich
- 17: Anschlussleitung
- 18: Kontaktierung des zweiten Kontaktbereichs
- 19: Kontaktierung des ersten Kontaktbereichs
- 20: Erstes Zentrierelement
- 21: Zweites Zentrierelement
- 22: Kontaktelement

## Patentansprüche

1. Elektrisch leitende Fahrbahnmarkierung (2) mit
• einer Trägerbahn (7),
• zumindest zwei, sich längs der Trägerbahn erstreckenden, elektrisch leitfähigen Adern (9, 10),
• einer die Adern (9, 10) abdeckenden, elektrisch isolierenden Deckschicht (12) und
• mit wenigstens einer Stromeinspeisung, die von einer Schnittstelle zum Einspeisen von Strom und/oder Daten gebildet ist und die Adern (9, 10) mit einer Zuleitung verbindet, wobei
entlang der Fahrbahnmarkierung (2) im Abstand zueinander angeordnete Schnittstellen mit elektrischen Kontaktierungsbereichen vorgesehen sind, über die elektrische Verbraucher mit zumindest einer der Adern verbindbar sind,
**dadurch gekennzeichnet, dass**
die Kontaktierungsbereiche von seitlich aus der Fahrbahnmarkierung herausragenden Kontaktelementen (22) gebildet sind, die Zuleitungen aufweisen, die einen ersten Kontaktbereich (14) der einen Ader (9) und einen zweiten Kontaktbereich (15) der anderen Ader (10) mit elektrisch abgreifbaren Kontaktierungen (18,19) verbinden, wobei die Adern (9,10) längs der Trägerbahn (7) verlaufend auf der Trägerbahn (7) angeordnet sind

2. Elektrisch leitende Fahrbahnmarkierung (2) nach Anspruch 1, **dadurch gekennzeichnet, dass** zumindest eine der Adern (9, 10) als Datenleitung ausgebildet ist.

3. Elektrisch leitende Fahrbahnmarkierung (2) nach Anspruch 1 oder 2, **dadurch gekennzeichnet, dass** zumindest eine Ader (9 oder 10) als stromführende Phase und eine Ader (10 oder 9) als Nullleiter ausgebildet ist.

4. Elektrisch leitende Fahrbahnmarkierung (2) nach einem der Ansprüche 1 bis 3, **dadurch gekennzeichnet, dass** die Adern (9, 10) nebeneinander längs der Trägerbahn (7) verlaufend auf der Trägerbahn (7) angeordnet sind.

5. Elektrisch leitende Fahrbahnmarkierung (2) nach dem vorhergehenden Anspruch, **dadurch gekennzeichnet, dass** im Bereich der Kontaktierungsbereiche die Deckschicht (12) von einem abziehbaren, adhäsiven Schutzstreifen (13) gebildet ist, der über Sollbruchstellen oder Perforationen mit den angrenzenden Abschnitten der Deckschicht (12) verbunden ist.

6. Elektrisch leitende Fahrbahnmarkierung (2) nach Anspruch 5, **dadurch gekennzeichnet, dass** die Fahrbahnmarkierung (2) zumindest ein Kontaktelement (22) umfasst, das zumindest einen ersten Kontaktbereich (14) und einen zweiten Kontaktbereich (15) aufweist, wobei das Kontaktelement (22) eine mit dem ersten Kontaktbereich (14) und dem zweiten Kontaktbereich (15) verbundene Anschlussleitung (17) aufweist und nach Entfernen des Schutzstreifens (13) auf dem Kontaktierungsbereich derart befestigt werden kann, dass der erste Kontaktbereich (14) in elektrischen Kontakt mit der Ader (9) und der zweite Kontaktbereich (15) in elektrischen Kontakt mit der Ader (10) kommt.

7. Elektrisch leitende Fahrbahnmarkierung (2) nach einem der vorhergehenden Ansprüche, **dadurch gekennzeichnet, dass** zwischen den Adern (9, 10) eine Isolationsschicht (11) angeordnet ist und die Deckschicht (12) lichtreflektierend ausgebildet ist.

8. Elektrisch leitende Fahrbahnmarkierung (2) nach einem der beiden vorhergehenden Ansprüche, **dadurch gekennzeichnet, dass** zumindest eine weitere Ader vorgesehen ist und das Kontaktelement (22) derart ausgebildet ist, dass es auch mit der weiteren Ader in elektrischen Kontakt kommt und somit die Anschlussleitung (17) hiermit zu kontaktieren vermag.

9. Elektrisch leitende Fahrbahnmarkierung (2) nach einem der Ansprüche 1 bis 8, **dadurch gekennzeichnet, dass** zumindest eine neben der ersten Ader (9) und der zweiten Ader (10) angeordnete weitere Ader vorgesehen ist und zumindest zwei unterschiedliche Kontaktelemente (22) vorgesehen sind, wobei eine erste Ausgestaltung des Kontaktelementes (22) die erste Ader (9) und die zweite Ader (10) und eine zweite Ausgestaltung des Kontaktelementes (22) die weitere Ader und die erste Ader (9) oder die zweite Ader (10) mit der Anschlussleitung (17) zu kontaktieren vermag.

10. Elektrisch leitende Fahrbahnmarkierung (2) nach einem der Ansprüche 6 bis 9, **dadurch gekennzeichnet, dass** das Kontaktelement (22) an seiner Oberseite die gleiche Oberflächenbeschaffenheit aufweist wie die Deckschicht (12) und zumindest außerhalb des ersten Kontaktbereichs (14) und des zweiten Kontaktbereichs zum Aufkleben auf den Kontaktbereich an seiner Unterseite adhäsiv ausgebildet ist.

11. Elektrisch leitende Fahrbahnmarkierung (2) nach einem der vorhergehenden Ansprüche, **dadurch gekennzeichnet, dass** die Fahrbahnmarkierung (2) zusätzlich Leuchtelemente umfasst, die alternativ zum Kontaktelement (22) auf den Kontaktbereich aufsetzbar sind und den ersten Kontaktbereich (14) und den zweiten Kontaktbereich (15) aufweisen, die eine am Leuchtelement angeordnete Lichtquelle mit den Adern (9, 10) der Fahrbahnmarkierung verbinden.

12. Elektrisch leitende Fahrbahnmarkierung (2) nach einem der vorhergehenden Ansprüche, **dadurch gekennzeichnet, dass** die Fahrbahnmarkierung (2) wenigstens ein Funktionselement umfasst, das alternativ zum Kontaktelement (22) auf den Kontaktbereich aufsetzbar ist und zur Erfassung wenigstens einer Umgebungsvariablen zumindest einen Sensor, insbesondere in Form eines Temperatursensors, eines Vibrationssensors, eines Nebelmessers, eines Kontaktsensors oder eines Gewichtssensors, aufweist, wobei eine Steuerung vorgesehen ist, die das Signal des Sensors auszuwerten und in ein Datensignal umzuwandeln sowie in zumindest eine Ader einzukoppeln vermag.

13. Straße mit wenigstens einer Fahrbahn und einer elektrisch leitenden Fahrbahnmarkierung (2) nach einem der vorhergehenden Ansprüche, **dadurch gekennzeichnet, dass** die Fahrbahnmarkierung (2) zumindest eine datenübertragende Ader aufweist und wenigstens ein Prozessrechner zum Einspeisen und/oder Auswerten von Daten an die Fahrbahnmarkierung (2) angeschlossen ist, wobei die Fahrbahnmarkierung (2) über die Kontaktierungsbereiche mit intelligenten oder passiven Sensoren verbunden ist, die Daten über die Kontaktierungsbereiche der Fahrbahnmarkierung (2) einzuspeisen oder von dieser auszulesen vermögen.

14. Straße nach dem vorhergehenden Anspruch, **dadurch gekennzeichnet, dass** an die Fahrbahnmarkierung (2) hintereinander Leuchten angeschlossen sind, wobei die Leuchten Leuchtmittel in Form von Leuchtdioden aufweisen und über die datenübertragende Ader Steuersignale des Prozessrechners an die Leuchten übertragbar sind, über die die Farbe Leuchtdioden und/oder deren Blinkfrequenz steuerbar ist.

15. Straße nach einem der beiden vorhergehenden Ansprüche, **dadurch gekennzeichnet, dass** sie Sensoren aufweist, die über die Kontaktierungsbereiche mit der Fahrbahnmarkierung verbunden sind, wobei die Sensoren Drucksensoren, hintereinander angeordnete, sich in Querrichtung über die Fahrbahn (1) erstreckende doppelte Drucksensoren zur Geschwindigkeitsmessung, Temperatursensoren, Helligkeitssensoren, Wärmesensoren zur Wilderkennung und/oder Windstärkesensoren sind.

## Claims

1. Electrically conductive road marking (2) with
• a support strip (7),
• at least two electrically conductive cores (9, 10) extending along the support strip,
• an electrically insulating cover layer (12) covering the cores (9, 10), and
• with a minimum of one power input formed by an interface to for supplying power and/or data and connecting the cores (9, 10) with a supply line, wherein
interfaces with electric contacting areas are envisaged arranged along the road marking (2) at distances from each other, via which electric consumers can be connected with at least one of the cores, **characterised in that** the contacting areas are formed by contact elements (22) projecting from the side of the road marking, having supply lines connecting a first contact area (14) of one core (9) and a second contact area (15) of the other core (10) with electrically connectable contacts (18, 19), wherein the cores (9, 10) are arranged on the support strip (7) to extend along said support strip (7).

2. Electrically conductive road marking (2) according to claim 1, **characterised in that** at least one of the cores (9, 10) is designed as a data line.

3. Electrically conductive road marking (2) according to claim 1 or 2, **characterised in that** at least one core (9 or 10) is designed as a live phase and one core (10 or 9) is designed as a neutral conductor.

4. Electrically conductive road marking (2) according to one of the claims 1 to 3, **characterised in that** the cores (9, 10) are arranged on the support strip (7) next to each other along said support strip (7).

5. Electrically conductive road marking (2) according to the preceding claim, **characterised in that** the cover layer (12) is formed of a peelable adhesive protection strip (13) in the area of the contacting areas, which is connected with the adjacent sections of the cover layer (12) via predetermined breaking points or perforations.

6. Electrically conductive road marking (2) according to claim 5, **characterised in that** the road marking (2) comprises at least cone contact element (22), which has at least one first contact area (14) and a second contact area (15), wherein the contact element (22) has a connection line (17) connected with the first contact area (14) and the second contact area (15) and can be fitted to the contacting area after removing the protection strip (13) in such a way that the first contact area (14) comes into electrical contact with the core (9) and the second contact area (15) comes into electrical contact with the core (10).

7. Electrically conductive road marking (2) according to one of the preceding claims, **characterised in that** an insulation layer (11) is arranged between the cores (9, 10) and the cover layer (12) is of a light reflecting design.

8. Electrically conductive road marking (2) according to one of the two preceding claims, **characterised in that** at least one further core is envisaged and the contact element (22) is designed in such a way that it also comes into electrical contact with the further core and can therefore contact the connection line (17).

9. Electrically conductive road marking (2) according to one of the claims 1 to 8, **characterised in that** at least one further core arranged next to the first core (9) and the second core (10) is envisaged, and at least two different contact elements (22) are envisaged, wherein a first design of the contact element (22) can contact the first core (9) and the second core (10), and a second design of the contact element (22) the further core and the first core (9) or the second core (10) with the connection line (17).

10. Electrically conductive road marking (2) according to one of the claims 6 to 9, **characterised in that** the contact element (22) has the same surface consistency as the cover layer (12) on its top and that at least outside of the first contact area (14) and the second contact area is designed to be adhesive on its underside for gluing onto the contact area.

11. Electrically conductive road marking (2) according to one of the preceding claims, **characterised in that** the road marking (2) comprises additional light elements, which can be placed on the contact area alternatively to the contact element (22) and have the first contact area (14) and the second contact area (15), which connect a light source arranged on the light element with the cores (9, 10) of the road marking.

12. Electrically conductive road marking (2) according to one of the preceding claims, **characterised in that** the road marking (2) comprises a minimum of one function element, which can be placed on the contact area alternatively to the contact element (22) and has at least one sensor for recording a minimum of one ambient variable, in particular in the form of a temperature sensor, a vibration sensor, a fog sensor, a contact sensor or a weight sensor, wherein a controller is envisaged, which can evaluate the signal of the sensor and convert it into a data signal as well as engage a minimum of one core.

13. Road with a minimum of one lane and an electrically conductive road marking (2) according to one of the preceding claims, **characterised in that** the road marking (2) has at least one data transmitting core and is connected to a minimum of one process computer for supplying and/or evaluating data to the road marking (2), wherein the road marking (2) is connected with intelligent or passive sensors via the contacting areas of the road marking (2), which can supply data via the contacting area, or from which data can be read out.

14. Road according to the preceding claim, **characterised in that** lights are connected with the road marking (2) one behind the other, wherein the lights include lighting means in the form of light diodes and via which the data-transmitting core can transmit control signals from the process computer to the lights, with which the colour of the light diodes and/or their flashing frequency can be controlled.

15. Road according to one of the two preceding claims, **characterised in that** it has sensors, which are connected with the road marking via the contacting areas, wherein the sensors are pressure sensors, double pressure sensors for speed measurement, temperature sensors, brightness sensors, heat sensors for wildlife detection and/or wind strength sensors arranged one behind the other, extending across the road (1) in a transverse direction.

## Revendications

1. Marquage routier (2) conducteur électrique avec
• une bande de support (7),
• au moins deux fils (9, 10) conducteurs électriques, s'étendant le long de la bande de support,
• une couche superficielle électro-isolante (12) recouvrant les fils (9, 10) et
• avec au moins une alimentation électrique, qui est formée d'une interface pour l'alimentation en courant et/ou en données et relie les fils (9, 10) avec une conduite d'alimentation, des interfaces disposées à distance les unes des autres étant prévues le long du marquage routier (2) avec des zones de contact électrique, à travers lesquelles les consommateurs électriques peuvent être reliés avec au moins un des fils, **caractérisé en ce que** les zones de contact sont formées d'éléments de contact (22) dépassant latéralement du marquage routier, lesdits éléments de contact présentant les conduites d'alimentation qui relient une première zone de contact (14) de l'un fil (9) et une deuxième zone de contact (15) de l'autre fil (10) avec des contacts agissant électriquement (18, 19), les fils (9, 10) étant disposés s'étendant sur la bande de support (7) le long de la bande de support (7).

2. Marquage routier (2) conducteur électrique selon la revendication 1, **caractérisé en ce qu'**au moins un des fils (9, 10) est formé comme un câble de données.

3. Marquage routier (2) conducteur électrique selon la revendication 1 ou 2, **caractérisé en ce qu'**au moins un fil (9 ou 10) est formé comme une phase conductrice d'électricité et un fil (10 ou 9) est formé comme un fil neutre.

4. Marquage routier (2) conducteur électrique selon l'une quelconque des revendications 1 à 3, **caractérisé en ce que** les fils (9, 10) sont disposés l'un à côté de l'autre s'étendant sur la bande de support (7) le long de la bande de support (7).

5. Marquage routier (2) conducteur électrique selon la revendication précédente, **caractérisé en ce que**, dans la région des zones de contact, la couche superficielle (12) est formée d'une bande de protection (13) adhésive amovible qui est reliée aux sections adjacentes de la couche superficielle (12) à travers des points de rupture déterminés ou des perforations.

6. Marquage routier (2) conducteur électrique selon la revendication 5, **caractérisé en ce que** le marquage routier (2) comprend au moins un élément de contact (22), qui présente au moins une première zone de contact (14) et une deuxième zone de contact (15), l'élément de contact (22) présentant un câble de connexion (17) relié à la première zone de contact (14) et à la deuxième zone de contact (15) et pouvant être fixé sur la zone de contact après avoir enlevé la bande de protection (13) de telle sorte que la première zone de contact (14) est en contact électrique avec le fil (9) et la deuxième zone de contact (15) est en contact électrique avec le fil (10).

7. Marquage routier (2) conducteur électrique selon l'une quelconque des revendications précédentes, **caractérisé en ce qu'**une couche isolante (11) est disposée entre les deux fils (9, 10) et **en ce que** la couche superficielle (12) est réfléchissante.

8. Marquage routier (2) conducteur électrique selon l'une quelconque des deux revendications précédentes, **caractérisé en ce qu'**au moins un autre fil est prévu et l'élément de contact (22) est formé de telle sorte qu'il est également en contact électrique avec l'autre fil et que le câble de connexion (17) est ainsi en contact.

9. Marquage routier (2) conducteur électrique selon l'une quelconque des revendications 1 à 8, **caractérisé en ce qu'**au moins un autre fil est prévu à côté du premier fil (9) et du deuxième fil (10) et qu'au moins deux éléments de contact (22) différents sont prévus, un premier aménagement de l'élément de contact (22) mettant en contact le premier fil (9) et le deuxième fil (10) et un deuxième aménagement de l'élément de contact (22) mettant en contact l'autre fil et le premier fil (9) ou le deuxième fil (10) avec le câble de connexion (17).

10. Marquage routier (2) conducteur électrique selon l'une quelconque des revendications 6 à 9, **caractérisé en ce que** l'élément de contact (22) présente le même état de surface sur sa face supérieure que la couche superficielle (12) et qu'il est adhésif au moins en dehors de la première zone de contact (14) et de la deuxième zone de contact pour coller sur la zone de contact.

11. Marquage routier (2) conducteur électrique selon l'une quelconque des revendications précédentes, **caractérisé en ce que** le marquage routier (2) comprend en plus des éléments lumineux qui peuvent être montés sur la zone de contact en alternative à l'élément de contact (22) et présentent la première zone de contact (14) et la deuxième zone de contact (15) qui relient une source de lumière disposée sur l'élément lumineux aux fils (9, 10) du marquage routier.

12. Marquage routier (2) conducteur électrique selon l'une des revendications précédentes, **caractérisé en ce que** le marquage routier (2) comprend au moins un élément fonctionnel qui peut être monté sur la zone de contact en alternative à l'élément de contact (22) et présente au moins un capteur, notamment sous forme d'un capteur de températures, d'un capteur de vibration, d'un mesureur de brouillard, d'un capteur de contact ou d'un capteur de poids, pour la saisie d'au moins une variable d'environnement, une commande, qui évalue le signal du capteur et le convertit en signal de données et le couple dans au moins un fil, étant prévue.

13. Chaussée avec au moins une voie de circulation et un marquage routier (2) conducteur électrique selon l'une des revendications précédentes, **caractérisée en ce que** le marquage routier (2) présente au moins un fil transmetteur de données et qu'au moins un processeur est raccordé au marquage routier (2) pour l'alimentation et/ou l'évaluation de données, le marquage routier (2) étant raccordé aux capteurs intelligents ou passifs par les zones de contact, lesdits capteurs alimentant en données ou les lisant par les zones de contact du marquage routier (2).

14. Chaussée selon la revendication précédente, **caractérisée en ce que** des éclairages sont raccordés les uns derrière les autres au marquage routier (2), les éclairages présentant des lampes sous forme de diodes lumineuses et par lesquels des signaux de commande du processeur peuvent être transmis aux éclairages par le fil transmetteur de données, par lesquels la couleur des diodes lumineuses et/ou sa fréquence de clignotement peuvent être commandées.

15. Chaussée selon l'une des deux revendications précédentes, **caractérisée en ce qu'**elle présente des capteurs qui sont raccordés au marquage routier par les zones de contact, les capteurs étant des capteurs de pression, des capteurs de pression doubles disposés les uns derrière les autres, s'étendant dans le sens transversal sur la voie de circulation (1), pour la mesure de la vitesse, des capteurs de températures, des capteurs de lumière, des capteurs de chaleur pour la détection du gibier et/ou des capteurs de force du vent.
